# FASCICULE DE BREVET EUROPEEN

(11) **EP 4 355 983 B1**
(45) Date de publication et mention de la délivrance du brevet: **29.01.2025**
(21) Numéro de dépôt: 22735022.0
(22) Date de dépôt: 13.06.2022
(51) Int. Cl.: F01D 17/16, F04D 29/56, B64C 11/06, B64C 11/26, F02C 9/20, B64D 27/00, F01D 9/04

(54) **REDRESSEUR NON-CARÉNÉ DE TURBOMACHINE, MODULE DE TURBOMACHINE ET TURBOMACHINE D'AÉRONEF**
NICHT UMMANTELTE LEITSCHAUFELANORDNUNG EINER TURBOMASCHINE, MODUL EINER TURBOMASCHINE UND TURBOMASCHINE EINES FLUGZEUGS
UNSHROUDED GUIDE VANE ASSEMBLY OF A TURBOMACHINE , MODULE OF A TURBOMACHINE AND TURBOMACHINE OF AN AIRCRAFT

(30) Priorité: 15.06.2021 FR 2106330
(43) Date de publication de la demande: 24.04.2024
(73) Titulaire: SAFRAN AIRCRAFT ENGINES, 75015 Paris (FR)
(72) Inventeur: MOUTON, Clémentine Charlotte Marie, 77550 MOISSY-CRAMAYEL (FR); BELMONTE, Olivier, 77550 MOISSY-CRAMAYEL (FR); BAZOT, Olivier, 77550 MOISSY-CRAMAYEL (FR); COTTET, Clément, 77550 MOISSY-CRAMAYEL (FR)
(74) Mandataire: Gevers & Orès
(86) Numéro de dépôt international: PCT/FR2022/051113
(87) Numéro de publication internationale: WO 2022/263752

(56) Documents cités:
- FR-A1- 3 082 230
- FR-A1- 3 087 830
- FR-A1- 3 087 831
- US-A- 4 884 948

## Description

### DOMAINE TECHNIQUE

La présente invention concerne le domaine des turbomachines, en particulier un redresseur non caréné de turbomachine équipé d'aubes de stator à calage variable, chacune fixée à un pivot. L'invention concerne également un module de turbomachine comprenant une hélice non carénée et un tel redresseur non caréné.

### TECHNIQUE ANTÉRIEURE

L'arrière-plan technique comprend notamment les documents FR 3 082 230 A1, US 4 884 948 A, FR 3 087 831 A1 et FR 3 087 830 A1.

FR 3 082 230 A1 divulgue un redresseur non caréné de turbomachine d'axe longitudinal, le redresseur comportant une pluralité d'aubes de stator s'étendant sensiblement suivant un axe radial, chaque aube de stator comprenant un pied et une pale s'élevant radialement depuis le pied, une pluralité de pivots, chacun associé à une aube de stator et étant monté pivotant suivant un axe de calage et destiné à être relié à un système de changement de pas des pales, une pluralité de systèmes de fixation, chacun associé à une aube de stator.

Des turbomachines comprenant au moins une hélice non carénée sont connues sous le terme anglais « open rotor » ou « unducted fan ». Dans cette catégorie de turbomachine, il existe celles qui ont deux hélices non carénées et contrarotatives (connues sous l'acronyme anglais UDF pour « UnDucted Fan ») ou celles ayant une seule hélice non carénée et un redresseur comprenant plusieurs aubes de stator (connues sous l'acronyme anglais USF pour « Unducted Single Fan »). L'hélice ou les hélices formant la partie propulsive peut(peuvent) être placée(s) à l'arrière du générateur de gaz (ou moteur) de sorte à être du type pousseur ou à l'avant du générateur de gaz de sorte à être du type tracteur. Ces turbomachines sont des turbopropulseurs qui se distinguent des turboréacteurs par l'utilisation d'une hélice à l'extérieur de la nacelle (non carénée) au lieu d'une soufflante interne. Cela permet d'augmenter le taux de dilution de façon très importante sans être pénalisé par la masse des carters ou nacelles destiné(e)s à entourer les pales de l'hélice ou soufflante.

Les aubes de stator du redresseur sont installées généralement sur un carter d'entrée qui porte le bec de séparation des flux primaire et secondaire circulant respectivement dans une veine primaire et autour du carter d'entrée. Contrairement à l'hélice amont d'une turbomachine de type USF, les aubes de stator du redresseur sont fixes en rotation et par conséquent ne subissent pas d'effort centrifuge.

Les aubes de stator s'étendent depuis le carter d'entrée et sont avantageusement à calage variable. A cet effet, chaque pied d'aube de stator est monté pivotant suivant un axe de calage et relié à un système de changement de pas monté dans la turbomachine. La zone d'intégration du pied et du pivot de l'aube de stator est une zone fortement contrainte par la présence de nombreux équipements autour de ceux-ci.

En outre, dans de telles turbomachines où un gain de poids est recherché, les aubes de stator sont de préférence réalisées en matériau composite à matrice polymère renforcée par des fibres, par exemple obtenues à partir d'une préforme tissée en trois dimensions. Ainsi, le pied de l'aube comprend une plateforme formée par deux demi-plateformes obtenues par déliaison de la préforme tissée 3D et reliées chacune à la pale sur toute la largeur de la pale.

Les technologies actuelles de fixation d'hélices ne répondent pas au besoin de fixation des aubes de stator d'une turbomachine de type USF car elles sont d'une part, encombrantes radialement ou tangentiellement, et d'autre part elles sont prévues pour supporter des efforts centrifuges importants. Il est donc nécessaire d'avoir une technologie répondant au juste besoin des aubes de stator d'un redresseur non caréné pour une turbomachine de type USF.

Partant de ces constations, un objectif de l'invention est donc de pallier aux inconvénients précités.

### RÉSUMÉ DE L'INVENTION

L'objectif de la présente invention est de fournir un redresseur non caréné équipé d'aubes de stator fixées sur des pivots de manière la plus compacte possible radialement et s'adaptant au mieux à la géométrie des pivots et des aubes de stator afin de limiter au maximum l'impact tangentiel et axial de celle-ci sur l'environnement.

À cet effet, l'invention concerne un redresseur non caréné de turbomachine d'axe longitudinal X, le redresseur comportant :
- une pluralité d'aubes de stator s'étendant sensiblement suivant un axe radial Z, chaque aube de stator comprenant un pied et une pale s'élevant radialement depuis le pied, le pied comprenant deux demi-plateformes s'étendant de part et d'autre de la pale,
- une pluralité de pivots, chacun associé à une aube de stator et étant monté pivotant suivant un axe de calage et destiné à être relié à un système de changement de pas des pales, chaque pivot comportant une plateforme supérieure et une partie inférieure de forme cylindrique,
- une pluralité de systèmes de fixation, chacun associé à une aube de stator et étant adapté pour fixer les demi-plateformes du pied de l'aube au pivot associé, chaque système de fixation comportant un système de serrage et deux plaques agencées de part et d'autre de la pale, chacune des plaques ayant une forme sensiblement identique à chaque demi-plateforme, le système de serrage étant conformé pour serrer les demi-plateformes du pied de l'aube entre les plaques du système de fixation et la plateforme supérieure du pivot.

Ainsi, cette solution permet d'atteindre l'objectif susmentionné. En particulier, l'invention permet de fixer chaque aube de stator non carénée à son pivot en prenant en étau les demi-plateformes de celle-ci (issues d'une déliaison dans le tissage des fibres des aubes) par l'intermédiaire de deux pièces ayant une forme s'adaptant à la fois à la forme du pivot et à la forme de l'aube de stator.

Une telle solution permet avantageusement d'avoir un encombrement radial réduit et d'augmenter ainsi la place disponible sous la veine. En effet, les plaques du système de fixation sont adaptées à la forme du pied de l'aube ainsi qu'à la forme de son pivot sans prendre plus de place que celle prévue pour ces éléments.

En outre, les plaques permettent d'éviter un contact direct entre un système de serrage, tel que des vis, et les demi-plateformes issues d'une déliaison dans le tissage des fibres des aubes.

Elle permet également de protéger les demi-plateformes des aubes de stator formées par déliaison des agressions externes.

Grâce à l'invention, il est possible de démonter aisément l'aubage sous aile sans démonter d'autre partie du moteur et sans devoir accéder sous la veine nacelle.

Le redresseur non caréné selon l'invention peut comprendre une ou plusieurs des caractéristiques suivantes, prises isolément les unes des autres ou en combinaison les unes avec les autres :
- pour chaque ensemble formé par une aube de stator, un pivot associé et un système de fixation associé, chaque demi-plateforme est reliée à la pale de l'aube par un congé de raccordement, chaque plateforme supérieure du pivot est de forme circulaire et chaque partie inférieure du pivot a un diamètre inférieur à celui de la plateforme supérieure, chaque plaque du système de fixation a sensiblement une forme de demi-lune comportant un bord latéral conformé pour épouser le congé de raccordement de la demi-plateforme contre laquelle la plaque est serrée ;
- chaque demi-plateforme est sensiblement plane ;
- chaque demi-plateforme a sensiblement une forme de demi-disque ;
- chaque bord latéral d'une plaque d'un système de fixation comporte un joint agencé sur toute la longueur du bord latéral et conformé pour épouser le congé de raccordement de la demi-plateforme contre laquelle la plaque est serrée ;
- chaque demi-plateforme d'un pied d'une aube comporte au moins deux orifices traversants, chaque plateforme supérieure d'un pivot associé à un pied de l'aube comporte des trous traversants arrangés chacun en face d'un orifice traversant d'une demi-plateforme, chaque plaque d'un système de fixation associée à un pied de l'aube comporte des trous traversants arrangés chacun en face d'un orifice traversant d'une demi-plateforme ;
- le système de serrage comporte au moins quatre vis et quatre moyens d'arrêt en rotation arrangés pour serrer les demi-plateformes du pied de l'aube entre les plaques du système de fixation et la plateforme supérieure du pivot, chaque vis étant insérée successivement dans un trou traversant d'une plaque du système de fixation, un orifice d'une demi-plateforme, un trou traversant du pivot et un moyen d'arrêt en rotation ;
- chaque trou traversant d'une plateforme supérieure comporte un insert auto-freiné pour empêcher la rotation d'une vis introduite dans le trou traversant ;
- chaque moyen d'arrêt en rotation est un écrou serti pour empêcher sa rotation ;
- chaque partie inférieure d'un pivot comporte un corps et une portion de diamètre plus large que le corps arrangée entre le corps et la plateforme supérieure et dans lequel chaque écrou serti d'un système de serrage comporte un méplat venant en appui contre la portion de diamètre plus large ;
- chaque moyen d'arrêt en rotation d'un système de serrage est un écrou emprisonné dans un trou traversant d'une plateforme supérieure d'un pivot ;
- chaque orifice traversant d'une demi-plateforme présente un insert métallique ;
- chaque demi-plateforme d'un pied d'une aube comporte deux amortisseurs arrangés sur deux faces opposées de la demi-plateforme, un des amortisseurs étant agencé entre la demi-plateforme et une plaque et l'autre des amortisseurs étant agencé entre la demi-plateforme et la plateforme supérieure du pivot ;
- les deux demi-plateformes du pied de l'aube sont issues d'une déliaison dans le tissage des fibres des aubes.

L'invention concerne également un module de turbomachine d'axe longitudinal X, comportant :
- une hélice non carénée destinée à être entrainée en rotation autour de l'axe longitudinal X,
- au moins un redresseur non caréné présentant l'une quelconque des caractéristiques précédentes, et
- un système de changement de pas des pales des aubes de stator autour d'un axe de calage A.

L'invention concerne en outre une turbomachine d'aéronef comprenant au moins un module de turbomachine tel que décrit précédemment.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 est une vue schématique, en coupe axiale et partielle d'un exemple de turbomachine avec une seule hélice non carénée et un redresseur non caréné à laquelle s'applique l'invention ;
- la figure 2 représente suivant une coupe partielle et axiale d'un redresseur monté en aval d'une hélice d'un module de turbomachine auquel s'applique l'invention ;
- la figure 3 est une vue très schématique, en coupe transverse d'une aube de stator d'un redresseur non caréné selon l'invention ;
- la figure 4 représente schématiquement une vue de dessus de l'aube de stator de la figure 3 ;
- la figure 5 illustre schématiquement une vue de dessus d'un pivot d'un redresseur non caréné selon l'invention ;
- la figure 6 est une vue schématique, en coupe transverse du pivot de la figure 5 ;
- la figure 7 est une vue schématique, en coupe transverse, du pivot de la figure 6 monté pivotant grâce à un palier de guidage dans un manchon ;
- la figure 8 illustre schématiquement une vue de dessus des plaques d'un système de fixation d'une aube de stator à un pivot l'invention ;
- la figure 9 est une vue très schématique, en coupe transverse d'une aube de stator liée à un pivot d'un redresseur non caréné selon l'invention ; et
- la figure 10 illustre schématiquement une vue de dessus d'un pivot de l'aube de stator liée à un pivot de la figure 9.

Sur les différentes figures, les éléments analogues sont désignés par des références identiques. En outre, les différents éléments ne sont pas nécessairement représentés à l'échelle afin de présenter une vue permettant de faciliter la compréhension de l'invention.

### DESCRIPTION DES MODES DE RÉALISATION

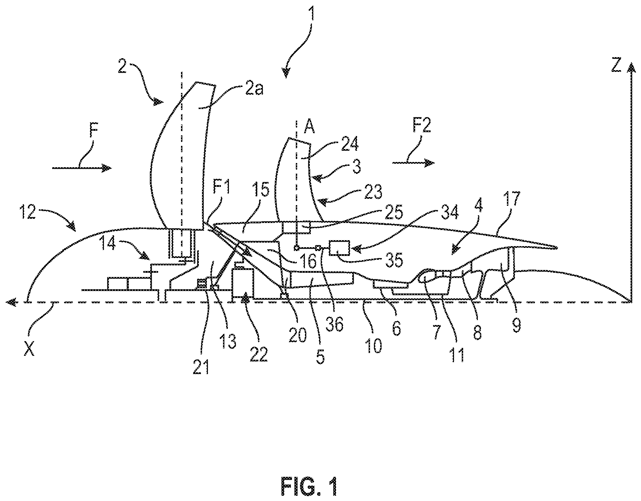

L'invention s'applique à une turbomachine 1 comprenant une seule hélice 2 non carénée et un redresseur 3 également non caréné. La turbomachine est destinée à être montée sur un aéronef. Une telle turbomachine est un turbopropulseur tel que représenté sur la figure 1. Cette turbomachine est connue sous l'expression anglaise « Unducted Single Fan » comme explicité précédemment. L'invention s'applique également à d'autres types de turbomachine.

Dans la présente invention, et de manière générale, les termes « amont », « aval » « axial » et « axialement » sont définis par rapport à la circulation des gaz dans la turbomachine et ici suivant l'axe longitudinal X (et même de gauche à droite sur la figure 1). De même, les termes « radial », « interne » et « externe » sont définis par rapport à un axe radial Z perpendiculaire à l'axe longitudinal X et au regard de l'éloignement par rapport à l'axe longitudinal X.

Sur la figure 1, la turbomachine 1 comprend un générateur de gaz 4 qui comporte typiquement d'amont en aval, un compresseur basse pression 5, un compresseur haute pression 6, une chambre de combustion 7, une turbine haute pression 8 et une turbine basse pression 9. Le compresseur basse pression 5 et la turbine basse pression 9 sont reliés mécaniquement par un arbre basse pression 10 de manière à former un corps basse pression. Le compresseur haute pression 6 et la turbine haute pression 8 sont reliés mécaniquement par un arbre haute pression 11 de manière à former un corps haute pression. L'arbre basse pression 10 s'étend au moins en partie à l'intérieur de l'arbre haute pression 11 et sont coaxiaux à l'axe longitudinal X.

L'hélice 2 non carénée est formée d'une couronne de pales 2a mobiles qui s'étendent depuis un carter rotatif 12 qui est centré et mobile en rotation autour de l'axe longitudinal X. Le carter rotatif 12 est monté mobile par rapport à un carter interne 13 qui s'étend en aval du carter rotatif 12. Dans l'exemple représenté de la figure 1, l'hélice 2 est montée en amont du générateur de gaz 4 (configuration de tracteur ou « puller » en anglais). De manière alternative, l'hélice 2 est montée en aval du générateur de gaz 4 (configuration de pousseur ou « pusher » en anglais). Les pales 2a de l'hélice 2 peuvent être à calage variable au moyen d'un système de changement de pas 14.

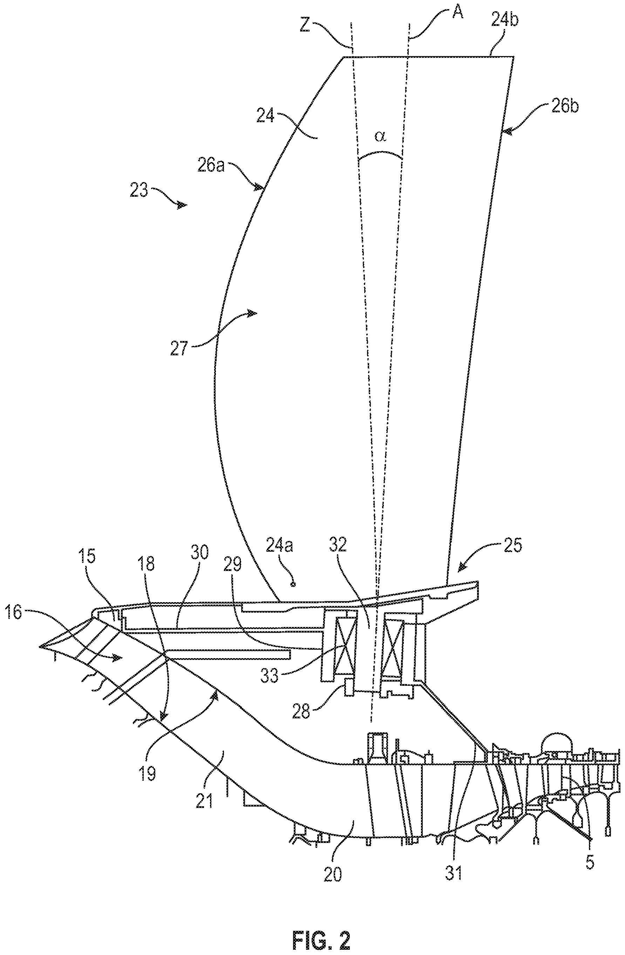

Un flux d'air F qui traverse la turbomachine 1 se divise en un flux d'air primaire F1 et en un flux d'air secondaire F2 au niveau d'un bec de séparation 15. Ce dernier est porté par un carter d'entrée 16 centré sur l'axe longitudinal. Le carter rotatif 12 est également monté mobile par rapport au carter d'entrée 16. Ce dernier est prolongé en aval par un carter externe ou carter inter-veine 17. En particulier, le carter d'entrée 16 comprend une virole radialement interne 18 et une virole radialement externe 19 (visibles sur la figure 2) qui sont centrées sur l'axe X et qui forment en partie, respectivement les parois radialement interne et externe de la veine primaire 20 dans laquelle circule le flux d'air primaire F1. Une pluralité de bras structuraux 21 s'étend radialement entre la virole radialement interne 18 et la virole radialement externe 19.

L'arbre de puissance ou l'arbre basse pression 10 (respectivement de la turbine libre de puissance et de la turbine basse pression) entraîne l'hélice 2 qui comprime le flux d'air à l'extérieur du carter externe 17 et fournit la majeure partie de la poussée. Eventuellement, un réducteur 22 est interposé entre l'hélice 2 et l'arbre de puissance comme cela est représenté sur la figure 1. Le réducteur 22 peut être de type à train planétaire ou à train épicycloïdal.

En référence aux figures 1 et 2, le redresseur 3 est disposé en aval de l'hélice 2. Le redresseur 3 comprend une pluralités d'aubes de stator 23 (ou aubes fixes) connues sous l'acronyme anglais OGV pour « Outlet Guide Vane ». Les aubes de stator 23 sont réparties régulièrement autour de l'axe longitudinal X et s'étendent radialement dans le flux d'air secondaire F2. Les aubes de stator 23 du redresseur 3 sont disposées en aval des pales 2a de l'hélice 2 de manière à redresser le flux d'air généré par celles-ci.

Les différents éléments décrits ci-dessus sont assemblés et/ou fabriqués de manière modulaire de sorte à les fabriquer plus facilement et à faciliter leurs maintenances.

Suivant l'exemple, les pales des aubes de stator 23 de ce module présentent une hauteur sensiblement suivant l'axe radial qui est inférieure à celle des pales 2a de l'hélice 2. De la sorte, les aubes de stator peuvent redresser le flux créé par l'hélice 2 en amont tout en limitant la trainée et la masse. Par exemple, les aubes de stator 23 présentent une hauteur suivant l'axe radial qui est comprise entre 30% et 90% de la hauteur radiale des pales de l'hélice 2.

En référence à la figure 2, chaque aube de stator 23 comprend une pale 24 qui s'étend radialement depuis un pied 25 entre une extrémité radialement interne 24a et une extrémité radialement externe 24b libre. Les pales 24 comprennent également chacune un bord d'attaque 26a et un bord de fuite 26b opposés axialement. Les bords d'attaque et de fuite 26a, 26b sont reliés par des surfaces intrados et extrados 27 (A,B) qui sont opposées transversalement. Par exemple, il y a entre six et douze aubes de stator 23 autour du carter d'entrée 16.

Les aubes de stator 23 sont avantageusement à calage variable de manière à optimiser la performance de la turbomachine. Un deuxième système de changement de pas 34 (visible sur la figure 1) qui est monté dans la turbomachine, et en particulier dans le carter externe 17, est relié aux pales des aubes de stator 23 de manière à leur permettre de pivoter autour de leurs axes de calage A. L'axe de calage peut-être l'axe radial Z ou incliné par rapport à l'axe radial Z d'un angle inférieur à 45° (tel qu'illustré en figure 2). Une telle inclinaison est choisie pour adapter l'effet aérodynamique des aubes de stator 23.

A cet effet et comme cela est visible sur la figure 2, chaque pied 25 d'aube de stator 23 est liée à un pivot 32 monté pivotant suivant l'axe de calage A dans un logement interne 28 qui est formé dans une partie statique cylindrique creuse 29 formant manchon. Chaque manchon 29 est cylindrique et s'étend sensiblement suivant l'axe radial Z et est fixé rigidement à un carter, par exemple au carter d'entrée 16 en amont par une première patte 30 et en aval par une deuxième patte 31.

Le pivot 32 du pied 25 est monté pivotant grâce à au moins un palier de guidage 33 qui assure la rétention du pivot 32 dans le logement interne 28 de chaque manchon 29. Deux paliers de guidage peuvent être montés dans le logement 28 et de manière superposée suivant l'axe de calage A. Le ou les paliers est/sont de préférence, mais non limitativement, à roulements à billes.

Le système de changement de pas 34 comprend au moins un moyen de commande 35 et au moins un mécanisme de liaison 36 qui sont représentés schématiquement sur la figure 1. Le mécanisme de liaison 36 est relié d'une part, à chaque pied 25 d'aube 24 et au moyen de commande 35 d'autre part. Le pivot 32, qui traverse le manchon 29 de part et d'autre suivant l'axe de calage A, comprend une extrémité interne avec un excentrique qui est reliée à l'extrémité d'une biellette (non représentée) du mécanisme de liaison 36. Ce dernier comprend une pluralité de biellettes dont une de leurs extrémités est reliée chacune à un pied d'aube. L'autre extrémité de chaque biellette est reliée à un organe mobile du moyen de commande pouvant être un vérin hydraulique ou pneumatique.

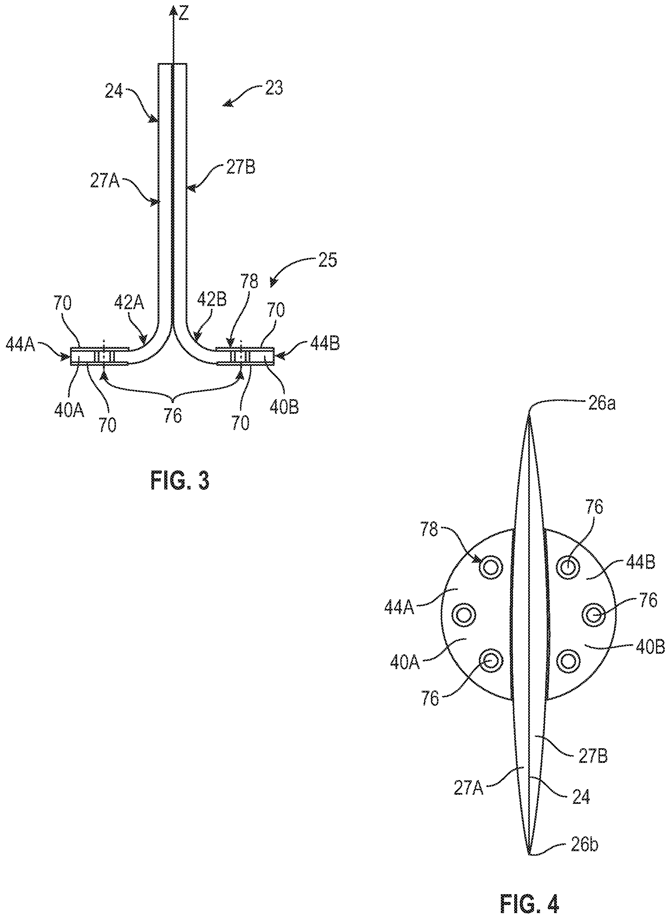

Dans de telles turbomachines où un gain de poids est recherché, les aubes de stator sont de préférence réalisées en matériau composite à matrice polymère renforcée par des fibres, par exemple obtenues à partir d'une préforme tissée en trois dimensions. En référence aux figures 3 et 4, le pied 25 de l'aube comprend avantageusement deux demi-plateformes 40 obtenues par déliaison de la préforme tissée 3D et reliées chacune à la pale 24 sur au moins une portion de la largeur de la pale (du bord d'attaque 26a au bord de fuite 26b) par un congé de raccordement 42. Ces deux demi-plateformes s'étendent de part et d'autre de la pale 24 dans une direction sensiblement perpendiculairement à la pale 24. La demi-plateforme qui s'étend du côté intrados 27A de la pale est nommée demi-plateforme intrados 40A et l'autre demi-plateforme s'étendant du côté extrados 27B de la pale est dite demi-plateforme extrados 40B.

De préférence, chaque demi-plateforme 40A, 40B du pied d'une aube est sensiblement plane. De même, chaque demi-plateforme 40A, 40B du pied d'une aube a une forme préférentiellement de demi-disque. En d'autres termes, l'extrémité libre 44A, 44B de chaque demi-plateforme 40A, 40B opposée à son extrémité liée à un congé de raccordement 42A, 42B présente de préférence un bord latéral de forme semi-circulaire. Chaque aube de stator 23 est associée à un pivot 32 auquel elle est liée au niveau de son pied par un système de fixation. Il y a autant de pivots et de systèmes de fixation que d'aubes de stator.

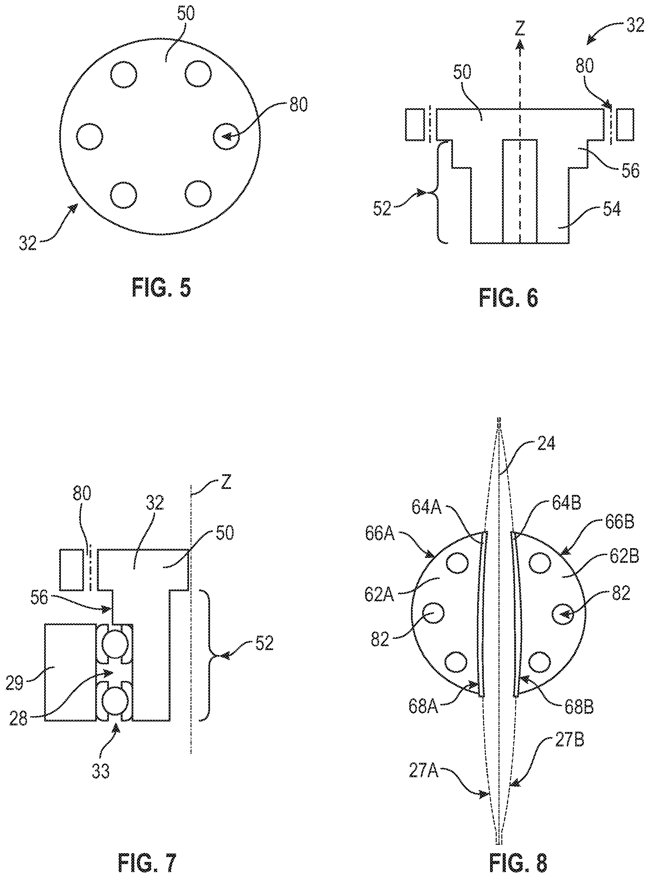

En référence aux figures 5 à 7, chaque pivot 32 est de forme cylindrique et comporte une plateforme supérieure 50 pour supporter les deux demi-plateformes 40A, 40B d'un pied d'une aube et une partie inférieure 52 montée au moins partiellement dans le logement interne 28 formé dans le manchon 29 dans un palier de guidage 33. La partie inférieure du pivot 52 a un diamètre inférieur à celui de la plateforme supérieure 50.

Préférentiellement, la partie inférieure 52 du pivot 32 comporte un corps cylindrique 54 et une portion 56 intermédiaire cylindrique de diamètre plus large que le corps 54 mais plus petite que le diamètre de la plateforme 50 du pivot. Cette portion intermédiaire 56 est arrangée entre le corps 54 et la plateforme supérieure 50 du pivot 32. Cette portion intermédiaire 56 comporte une première extrémité liée à la plateforme supérieure 50 et une seconde extrémité liée au corps 54 de la partie inférieure. Cette seconde extrémité vient en appui sur un palier de guidage 33 assurant la rétention du pivot 32 dans le logement interne 28 de chaque manchon 29. Seul le corps 54 de la partie inférieure 52 du pivot 32 est insérée dans le logement 28.

De préférence, la plateforme supérieure 50 du pivot 32 est de forme similaire à l'ensemble formé par les deux demi-plateformes 40A, 40B du pied 25 de l'aube 23, c'est-à-dire de forme circulaire.

Chaque système de fixation d'un pied 25 d'une aube à un pivot 32 est adapté pour fixer les demi-plateformes 40A, 40B du pied de l'aube au pivot 32 associé. A cet effet, chaque système de fixation comporte un système de serrage 60 et deux plaques 62A, 62B agencées de part et d'autre de la pale 24.

Le système de serrage est conformé pour serrer les demi-plateformes (intrados 40A et extrados 40B) du pied de l'aube entre les plaques 62A, 62B du système de fixation et la plateforme supérieure 50 du pivot. En d'autres termes, le système de serrage est adapté pour prendre en sandwich les demi-plateformes 40A, 40B du pied 25 de l'aube entre les plaques 62A, 62B du système de fixation et la plateforme supérieure 50 du pivot. En particulier, la demi-plateforme intrados 40A est prise en sandwich entre une des plaques, dite plaque intrados 62A, du système de fixation et la plateforme supérieure 50 du pivot 32 tandis que la demi-plateforme extrados 40B est prise en sandwich entre l'autre des plaques, dite plaque extrados 62B, du système de fixation et la même plateforme supérieure 50.

En référence à la figure 8, chaque plaque 62A, 62B a une forme et des dimensions adaptées à chaque demi-plateforme 40A, 40B, c'est-à-dire sensiblement identiques à la demi-plateforme contre laquelle elle est destinée à être serrée. Ainsi, chaque plaque du système de fixation a sensiblement une forme de demi-lune comportant un premier bord latéral 64A, 64B conformé pour épouser le congé de raccordement 42A, 42B de la demi-plateforme contre laquelle la plaque est serrée et un second bord latéral 66A, 66B de forme circulaire identique au bord latéral 44A, 44B de l'extrémité libre de la demi-plateforme 40A, 40B contre laquelle elle est destinée à être serrée. En d'autres termes, la plaque intrados 62A a un premier bord latéral 64A conformé pour s'adapter au côté intrados 27A du profil de la pale au niveau du congé de raccordement 42A de la demi-plateforme intrados 40A contre laquelle la plaque intrados est serrée. De façon similaire, la plaque extrados 62B a un premier bord latéral 64B conformé pour s'adapter au côté extrados 27B du profil de la pale au niveau du congé de raccordement 42B de la demi-plateforme extrados 40B.

De préférence, chaque premier bord latéral 64A, 64B d'une plaque comporte un joint 68A, 68B agencé sur toute la longueur du premier bord latéral et conformé pour épouser les profils (intrados ou extrados) de la pale au niveau du congé de raccordement 42A, 42B de la demi-plateforme 40A, 40B contre laquelle la plaque est serrée. Ces joints 68A, 68B permettent à la fois de limiter la circulation de l'air entre les demi-plateformes 40A, 40B et les plaques 62A, 62B du système de fixation ainsi que de ne pas endommager l'aube en fonctionnement.

Les plaques 62A, 62B du système de fixation permettent avantageusement de ne pas serrer le système de serrage directement sur le pied de l'aube, évitant d'endommager l'aube au moment du montage et potentiellement des besoins de changement de pièces couteuses.

En outre, les plaques permettent de reconstituer la veine externe permettant de protéger les déliaisons de l'aube, la protégeant ainsi des agressions externes en fonctionnement. Avantageusement, les plaques permettent d'avoir une surface externe en regard de la veine mieux maitrisée.

Chaque demi-plateforme 40A, 40B d'un pied 25 d'une aube comporte de préférence deux amortisseurs 70 visibles sur la figure 3 et arrangés sur deux faces opposées de la demi-plateforme. Un des amortisseurs 70 est agencé entre la demi-plateforme 40A, 40B et une plaque 62A, 62B tandis que l'autre des amortisseurs 70 est agencé entre la demi-plateforme 40A, 40B et la plateforme supérieure 50 du pivot 32. Les amortisseurs 70 permettent de limiter les frottements entre les demi-plateformes de l'aube en matériau composite et les pièces métalliques telles que les plaques du système de fixation et les éléments du pivot.

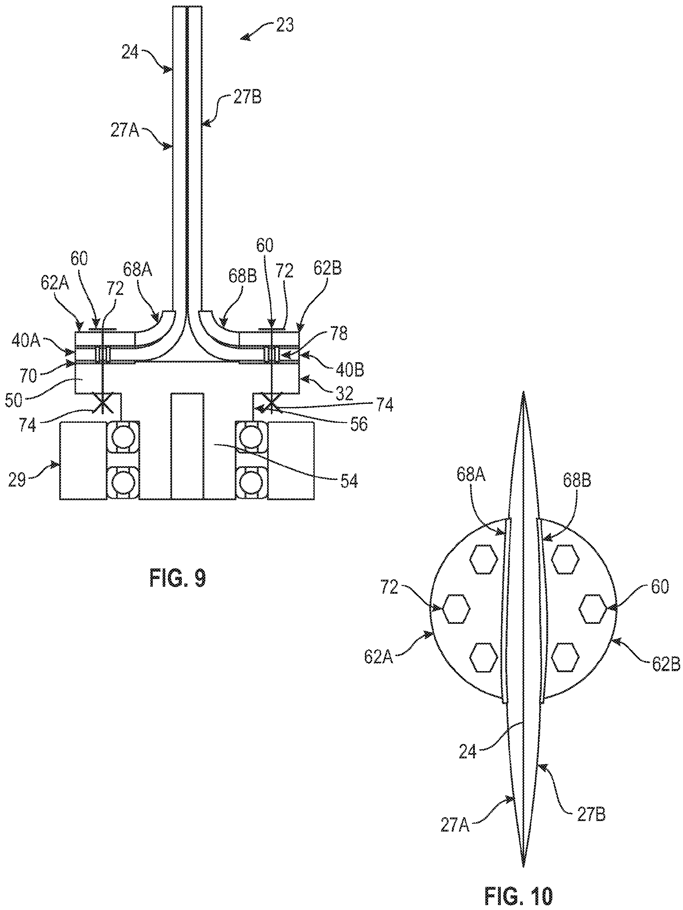

Avantageusement, le système de serrage comporte des vis 72, de préférence à têtes fraisées, et des moyens d'arrêt en rotation 74, par exemple des écrous, arrangés pour serrer les demi-plateformes 40A, 40B du pied 25 de l'aube entre les plaques 62A, 62B du système de fixation et la plateforme supérieure 50 du pivot afin de les lier ensemble. De tels vis 72 et écrous sont visibles sur les figures 9 et 10 qui représentent schématiquement une aube de stator 23 fixée à un pivot 32 par un système de fixation selon l'invention.

Pour cela, et en référence aux figures 3 et 4, chaque demi-plateforme 40A, 40B d'un pied d'une aube comporte au moins deux orifices traversants 76 de passage de vis, de préférence trois orifices traversants. Chaque orifice traversant 76 s'étend sensiblement suivant un axe radial Z. Les orifices traversants 76 sont régulièrement espacés et agencés dans une zone périphérique de la demi-plateforme 40A, 40B à une distance de l'axe radial Z de la pale comprise entre le diamètre de la portion intermédiaire 56 de la partie inférieure 52 du pivot et le diamètre de la plateforme supérieure 50 du pivot 32.

Chaque orifice traversant 76 d'une demi-plateforme présente avantageusement un insert métallique 78 permettant de protéger le matériau composite des demi-plateformes du pied de l'aube lors du montage/serrage des vis 72.

De même, chaque plateforme supérieure 50 d'un pivot est percée de plusieurs trous traversants 80 pour le passage de vis visibles sur les figures 5 à 7. Chaque pivot 32 comporte autant de trous 80 que le pied 25 de l'aube auquel il est associé et auquel il est destiné à être fixé. Ainsi, chaque plateforme supérieure 50 comporte au moins quatre trous traversants 80, de préférence six trous traversants. De façon similaire, les trous traversants 80 du pivot sont arrangés chacun en face d'un orifice traversant 76 d'une demi-plateforme 40A, 40B contre laquelle il sera appuyé par serrage. Chaque trou traversant 80 du pivot s'étend sensiblement suivant un axe radial Z.

De la même manière, chaque plaque 62A, 62B d'un système de fixation associée à un pied 25 de l'aube comporte des trous traversants 82 pour le passage de vis 72 visibles sur la figure 8. Chaque plaque 62A, 62B comporte autant de trous 82 que la demi-plateforme 40A, 40B du pied à laquelle elle est associée et à laquelle elle est destinée à être fixée. Ainsi, chaque plaque 62A, 62B comporte au moins deux trous traversants 82, de préférence trois trous traversants arrangés chacun en face d'un orifice traversant 76 de la demi-plateforme contre laquelle elle est serrée. Chaque trou traversant 82 d'une plaque 62A, 62B s'étend sensiblement suivant un axe radial Z.

En regard de la figure 9, chaque vis 72 du système de serrage est insérée successivement dans un trou traversant 82 d'une plaque 62A, 62B du système de fixation, un orifice 76 d'une demi-plateforme 40A, 40B, un trou traversant 80 du pivot 32 et un moyen d'arrêt en rotation 74.

De préférence, chaque moyen d'arrêt en rotation 74 est un écrou serti pour empêcher sa rotation. Avantageusement, chaque écrou serti comporte un méplat venant s'appuyer contre la portion intermédiaire 56 de la partie inférieure 52 d'un pivot afin de bloquer la rotation des écrous.

Alternativement, chaque moyen d'arrêt en rotation 74 est un écrou emprisonné dans un perçage 80 d'une plateforme supérieure 50 d'un pivot 32.

Selon une autre alternative non illustrée, chaque trou traversant 80 d'une plateforme supérieure 50 d'un pivot 32 comporte un insert auto-freiné pour empêcher la rotation de la vis introduite dans le trou traversant 80.

L'invention telle que décrite précédemment propose une solution compacte pour la liaison d'une aube de stator à un pivot permettant de limiter l'encombrement au niveau du moyeu de l'aube de stator et de pouvoir être aisément accessible pour procéder au démontage/montage du profil de l'aube de stator sous aile sans nécessiter de devoir intervenir sur d'autres parties du moteur.

L'invention a été décrite dans le cadre d'une turbomachine du type USF, néanmoins elle s'applique à toute turbomachine comportant des aubes non carénées nécessitant d'être liée à un pivot et dont les efforts centrifuges sont faibles.

## Revendications

1. Redresseur non caréné de turbomachine d'axe longitudinal (X), le redresseur comportant :
- une pluralité d'aubes de stator (23) s'étendant sensiblement suivant un axe radial (Z), chaque aube de stator (23) comprenant un pied (25) et une pale (24) s'élevant radialement depuis le pied (25), le pied (25) comprenant deux demi-plateformes (40A, 40B) s'étendant de part et d'autre de la pale (24),
- une pluralité de pivots (32), chacun associé à une aube de stator (23) et étant monté pivotant suivant un axe de calage (A) et destiné à être relié à un système de changement de pas (34) des pales, chaque pivot (32) comportant une plateforme supérieure (50) et une partie inférieure (52) de forme cylindrique,
- une pluralité de systèmes de fixation, chacun associé à une aube de stator (23) et étant adapté pour fixer les demi-plateformes (40A, 40B) du pied de l'aube au pivot associé, chaque système de fixation comportant un système de serrage et deux plaques (62A, 62B) agencées de part et d'autre de la pale (24), chacune des plaques ayant une forme sensiblement identique à chaque demi-plateforme, le système de serrage étant conformé pour serrer les demi-plateformes (40A, 40B) du pied de l'aube entre les plaques (62A, 62B) du système de fixation et la plateforme supérieure (50) du pivot.

2. Redresseur selon la revendication 1, dans lequel pour chaque ensemble formé par une aube de stator (23), un pivot (32) associé et un système de fixation associé, chaque demi-plateforme (40A, 40B) est reliée à la pale (24) de l'aube par un congé de raccordement (42A, 42B), chaque plateforme supérieure (50) du pivot est de forme circulaire et chaque partie inférieure du pivot (52) a un diamètre inférieur à celui de la plateforme supérieure (50), chaque plaque (62A, 62B) du système de fixation a sensiblement une forme de demi-lune comportant un bord latéral (64A, 64B) conformé pour épouser le congé de raccordement (42A, 42B) de la demi-plateforme (40A, 40B) contre laquelle la plaque est serrée, de préférence chaque demi-plateforme (40A, 40B) est sensiblement plane et/ou a sensiblement une forme de demi-disque.

3. Redresseur selon la revendication 2, dans lequel chaque bord latéral (64A, 64B) d'une plaque (62A, 62B) d'un système de fixation comporte un joint 68A, 68B agencé sur toute la longueur du bord latéral et conformé pour épouser le congé de raccordement (42A, 42B) de la demi-plateforme (40A, 40B) contre laquelle la plaque est serrée.

4. Redresseur selon l'une des revendications 1 à 3, dans lequel :
- chaque demi-plateforme (40A, 40B) d'un pied (25) d'une aube comporte au moins deux orifices traversants (76), chaque plateforme supérieure (50) d'un pivot (32) associé au pied de l'aube comporte des trous traversants (80) arrangés chacun en face d'un orifice traversant (76) d'une demi-plateforme, chaque plaque (62A, 62B) d'un système de fixation associée à un pied de l'aube comporte des trous traversants (82) arrangés chacun en face d'un orifice traversant (76) d'une demi-plateforme (40A, 40B), et
- le système de serrage comporte au moins quatre vis (72) et quatre moyens d'arrêt en rotation (74) arrangés pour serrer les demi-plateformes (40A, 40B) du pied de l'aube entre les plaques (62A, 62B) du système de fixation et la plateforme supérieure (50) du pivot, chaque vis étant insérée successivement dans un trou traversant (82) d'une plaque du système de fixation, un orifice (76) d'une demi-plateforme, un trou traversant (80) du pivot (32) et un moyen d'arrêt en rotation (74).

5. Redresseur selon la revendication 4, dans lequel chaque moyen d'arrêt en rotation (74) est un écrou serti pour empêcher sa rotation.

6. Redresseur selon la revendication 5, dans lequel chaque partie inférieure (52) d'un pivot comporte un corps (54) et une portion (56) de diamètre plus large que le corps (54) arrangée entre le corps (54) et la plateforme supérieure (50) et dans lequel chaque écrou serti d'un système de serrage comporte un méplat venant en appui contre la portion (56) de diamètre plus large.

7. Redresseur selon la revendication 4, dans lequel chaque moyen d'arrêt en rotation (74) d'un système de serrage est un écrou emprisonné dans un trou traversant (80) d'une plateforme supérieure (50) d'un pivot (32).

8. Redresseur selon l'une des revendications 4 à 7, dans lequel chaque orifice traversant (76) d'une demi-plateforme (40A, 40B) présente un insert métallique (78).

9. Redresseur selon l'une des revendications 4 à 8, dans lequel chaque demi-plateforme (40A, 40B) d'un pied d'une aube comporte deux amortisseurs (70) arrangés sur deux faces opposées de la demi-plateforme, un des amortisseurs étant agencé entre la demi-plateforme et une plaque et l'autre des amortisseurs étant agencé entre la demi-plateforme et la plateforme supérieure du pivot.

10. Redresseur selon l'une quelconque des revendications 1 à 9, dans lequel les aubes sont en matériau composite à matrice polymère renforcée par des fibres et les deux demi-plateformes (40A, 40B) du pied de l'aube sont issues d'une déliaison dans le tissage des fibres des aubes.

11. Module de turbomachine d'axe longitudinal X, comportant :
- une hélice (2) non carénée destinée à être entrainée en rotation autour de l'axe longitudinal X,
- au moins un redresseur (3) non caréné selon l'une des revendications précédentes, et
- un système de changement de pas (34) des pales des aubes de stator (23) autour d'un axe de calage A.

12. Turbomachine (1) d'aéronef comprenant au moins un module de turbomachine selon la revendication précédente.

## Patentansprüche

1. Nicht ummantelte Gleichrichter für eine Turbomaschine mit Längsachse (X), wobei der Gleichrichter umfasst:
- eine Vielzahl von Statorschaufeln (23), die sich im Wesentlichen entlang einer radialen Achse (Z) erstrecken, wobei jede Statorschaufel (23) einen Fuß (25) und einen Flügel (24) umfasst, der von dem Fuß (25) radial aufsteigt, wobei der Fuß (25) zwei Halbplattformen (40A, 40B) umfasst, die sich auf beiden Seiten des Flügels (24) erstrecken,
- eine Vielzahl von Drehzapfen (32), die jeweils einer Statorschaufel (23) zugeordnet sind und entlang einer Feststellachse (A) schwenkbar montiert sind und dazu bestimmt sind, mit einem System zur Verstellung der Schaufelblätter (34) verbunden zu werden, wobei jeder Drehzapfen (32) eine obere Plattform (50) und einen unteren Teil (52) von zylindrischer Form aufweist,
- eine Vielzahl von Befestigungssystemen, die jeweils einer Statorschaufel (23) zugeordnet sind und angepasst sind, um die Halbplattformen (40A, 40B) des Schaufelfußes an dem zugeordneten Drehzapfen zu befestigen, wobei jedes Befestigungssystem ein Klemmsystem und zwei Platten (62A, 62B) umfasst, die auf beiden Seiten des Flügels (24) angeordnet sind, wobei jede der Platten im Wesentlichen identisch mit jeder Halbplattform ist, wobei das Klemmsystem ausgebildet ist, um die Halbplattformen (40A, 40B) des Schaufelfußes zwischen den Platten (62A, 62B) des Befestigungssystems und der oberen Plattform (50) des Drehzapfens festzuklemmen.

2. Gleichrichter nach Anspruch 1, wobei für jede Einheit, die aus einer Statorschaufel (23), einem zugeordneten Drehzapfen (32) und einem zugeordneten Befestigungssystem gebildet ist, jede Halbplattform (40A, 40B) mit dem Schaufelflügel (24) durch eine Anschlussausrundung (42A, 42B) verbunden ist, jede obere Plattform (50) des Drehzapfens kreisförmig ist und jeder untere Teil des Drehzapfens (52) einen Durchmesser hat, der kleiner ist als derjenige der oberen Plattform (50), jede Platte (62A, 62B) des Befestigungssystems im Wesentlichen halbmondförmig ist und einen seitlichen Rand (64A, 64B) aufweist, der ausgebildet ist, um sich an die Anschlussausrundung (42A, 42B) der Halbplattform (40A, 40B) anzuschmiegen, gegen die die Platte geklemmt wird, vorzugsweise ist jede Halbplattform (40A, 40B) im Wesentlichen eben und/oder hat im Wesentlichen die Form einer Halbscheibe.

3. Gleichrichter nach Anspruch 2, wobei jeder seitliche Rand (64A, 64B) einer Platte (62A, 62B) eines Befestigungssystems eine Dichtung 68A, 68B aufweist, die über die gesamte Länge des seitlichen Randes angeordnet und ausgebildet ist, um sich an die Anschlussausrundung (42A, 42B) der Halbplattform (40A, 40B), gegen die die Platte geklemmt wird, anzuschmiegen.

4. Gleichrichter nach einem der Ansprüche 1 bis 3, wobei:
- jede Halbplattform (40A, 40B) eines Schaufelfußes (25) mindestens zwei Durchgangsöffnungen (76) aufweist, jede obere Plattform (50) eines dem Schaufelfuß zugeordneten Drehzapfens (32) Durchgangslöcher (80) aufweist, die jeweils gegenüber einer Durchgangsöffnung (76) einer Halbplattform angeordnet sind, jede Platte (62A, 62B) eines einem Schaufelfuß zugeordneten Befestigungssystems Durchgangslöcher (82) aufweist, die jeweils gegenüber einer Durchgangsöffnung (76) einer Halbplattform (40A, 40B) angeordnet sind, und
- das Klemmsystem mindestens vier Schrauben (72) und vier Drehsicherungsmittel (74) umfasst, die angeordnet sind, um die Halbplattformen (40A, 40B) des Schaufelfußes zwischen den Platten (62A, 62B) des Befestigungssystems und der oberen Plattform (50) des Drehzapfens festzuklemmen, wobei jede Schraube nacheinander in ein Durchgangsloch (82) einer Platte des Befestigungssystems, eine Öffnung (76) einer Halbplattform, ein Durchgangsloch (80) des Drehzapfens (32) und ein Drehsicherungsmittel (74) eingesetzt wird.

5. Gleichrichter nach Anspruch 4, wobei jedes Drehsicherungsmittel (74) eine Einpressmutter ist, um ihre Drehung zu verhindern.

6. Gleichrichter nach Anspruch 5, wobei jeder untere Teil (52) eines Drehzapfens einen Körper (54) und einen Abschnitt (56) mit einem größeren Durchmesser als der Körper (54) aufweist, der zwischen dem Körper (54) und der oberen Plattform (50) angeordnet ist, und wobei jede Einpressmutter eines Klemmsystems eine Abflachung aufweist, die an dem Abschnitt (56) mit größerem Durchmesser aufliegt.

7. Gleichrichter nach Anspruch 4, wobei jedes Drehsicherungsmittel (74) eines Klemmsystems eine Mutter ist, die in einem Durchgangsloch (80) einer oberen Plattform (50) eines Drehzapfens (32) eingeschlossen ist.

8. Gleichrichter nach einem der Ansprüche 4 bis 7, wobei jede Durchgangsöffnung (76) einer Halbplattform (40A, 40B) einen Metalleinsatz (78) aufweist.

9. Gleichrichter nach einem der Ansprüche 4 bis 8, wobei jede Halbplattform (40A, 40B) eines Schaufelfußes zwei Dämpfer (70) aufweist, die auf zwei gegenüberliegenden Seiten der Halbplattform angeordnet sind, wobei einer der Dämpfer zwischen der Halbplattform und einer Platte angeordnet ist und der andere der Dämpfer zwischen der Halbplattform und der oberen Plattform des Drehzapfens angeordnet ist.

10. Gleichrichter nach einem der Ansprüche 1 bis 9, wobei die Schaufeln aus einem faserverstärkten Polymermatrix-Verbundmaterial bestehen und die beiden Halbplattformen (40A, 40B) des Schaufelfußes aus einer Losbindung beim Weben der Schaufelfasern stammen.

11. Modul eines Turbotriebwerks mit einer Längsachse X, umfassend:
- einen nicht ummantelten Propeller (2), der dazu bestimmt ist, um die Längsachse X herum rotierend angetrieben zu werden,
- mindestens einen nicht ummantelten Gleichrichter (3) nach einem der vorstehenden Ansprüche, und
- ein System zur Änderung von Anstellwinkeln der Statorschaufeln (23) um eine Feststellpositionachse A.

12. Turbomaschine (1) eines Luftfahrzeugs, umfassend mindestens ein Modul eines Turbotriebwerks nach dem vorstehenden Anspruch.

## Claims

1. An unducted flow straightener for a turbomachine having a longitudinal axis (X), the flow straightener comprising:
- a plurality of stator vanes (23) extending substantially along a radial axis (Z), each stator vane (23) comprising a root (25) and a blade (24) rising radially from the root (25), the root (25) comprising two half-platforms (40A, 40B) extending on either side of the blade (24),
- a plurality of pivots (32), each associated with a stator vane (23) and pivotally mounted along a pitch axis (A) and intended to be connected to a pitch change system (34) for changing the pitch of the blades, each pivot (32) comprising an upper platform (50) and a cylindrical lower portion (52),
- a plurality of attachment systems, each associated with a stator vane (23) and being adapted to attach the half-platforms (40A, 40B) of the root of the vane to the associated pivot, each attachment system comprising a clamping system and two plates (62A, 62B) arranged on either side of the blade (24), each of the plates having a shape substantially identical to each half-platform, the clamping system being designed to clamp the half-platforms (40A, 40B) of the root of the vane between the plates (62A, 62B) of the attachment system and the upper platform (50) of the pivot.

2. The flow straightener as claimed in claim 1, wherein, for each assembly formed by a stator vane (23), an associated pivot (32) and an associated attachment system, each half-platform (40A, 40B) is connected to the blade (24) of the vane by a connection fillet (42A, 42B), each upper platform (50) of the pivot is circular in shape and each lower portion of the pivot (52) has a diameter smaller than that of the upper platform (50), each plate (62A, 62B) of the attachment system is substantially a half-moon-shaped, comprising a lateral edge (64A, 64B) shaped to match the connection fillet (42A, 42B) of the half-platform (40A, 40B) against which the plate is clamped, preferably each half-platform (40A, 40B) is substantially flat and/or is substantially half-disc-shaped.

3. The flow straightener as claimed in claim 2, wherein each lateral edge (64A, 64B) of a plate (62A, 62B) of an attachment system comprises a gasket 68A, 68B arranged along the entire length of the lateral edge and shaped to match the connection fillet (42A, 42B) of the half-platform (40A, 40B) against which the plate is clamped.

4. The flow straightener according to one of claims 1 to 3, wherein:
- each half-platform (40A, 40B) of a root (25) of a vane comprises at least two through-orifices (76), each upper platform (50) of a pivot (32) associated with the root of the vane comprises through-holes (80) each arranged opposite a through-orifice (76) of a half-platform, each plate (62A, 62B) of an attachment system associated with a root of the vane comprises through holes (82) each arranged opposite a through orifice (76) of a half-platform (40A, 40B), and
- the clamping system comprises at least four screws (72) and four rotation-stop means (74) arranged to clamp the half-platforms (40A, 40B) of the root of the vane between the plates (62A, 62B) of the attachment system and the upper platform (50) of the pivot, each screw being inserted successively into a through hole (82) in a plate of the attachment system, an orifice (76) in a half-platform, a through hole (80) in the pivot (32) and a rotation-stop means (74).

5. The flow straightener as claimed in claim 4, wherein each rotation-stop means (74) is a nut crimped to prevent its rotation.

6. The flow straightener according to claim 5, wherein each lower portion (52) of a pivot comprises a body (54) and a segment (56) of larger diameter than the body (54) arranged between the body (54) and the upper platform (50) and wherein each crimped nut of a clamping system comprises a flattened area coming in abutment against the segment (56) of larger diameter.

7. The flow straightener as claimed in claim 4, wherein each rotation-stop means (74) of a clamping system is a nut trapped in a through hole (80) of an upper platform (50) of a pivot (32).

8. The flow straightener according to one of claims 4 to 7, wherein each through-orifice (76) of a half-platform (40A, 40B) has a metallic insert (78).

9. The flow straightener according to one of claims 4 to 8, wherein each half-platform (40A, 40B) of a root of a vane comprises two dampers (70) arranged on two opposite faces of the half-platform, one of the dampers being arranged between the half-platform and a plate and the other of the dampers being arranged between the half-platform and the upper platform of the pivot.

10. The flow straightener according to any one of claims 1 to 9, wherein the vanes are made of a composite material with a fibre-reinforced polymer matrix and the two half-platforms (40A, 40B) of the root of the vane are produced by an unbinding in the weaving of the fibres of the vanes.

11. A turbomachine module with longitudinal axis X, comprising:
- an unducted propeller (2) designed to be driven in rotation about the longitudinal axis X,
- at least one unducted flow straightener (3) according to one of the preceding claims, and
- a pitch change system (34) for changing the pitch of the blades of the stator vanes (23) about a pitch axis A.

12. An aircraft turbomachine (1) comprising at least one turbomachine module according to the preceding claim.
